# EUROPEAN PATENT APPLICATION

(11) **EP 1 610 215 A1**
(43) Date of publication of application: **28.12.2005**
(21) Application number: 04720247.8
(22) Date of filing: 12.03.2004
(51) Int. Cl.: G06F 3/12, H04N 1/00

(54) **INFORMATION DISTRIBUTION SYSTEM, INFORMATION DISTRIBUTION SERVER, PRINTER, AND INFORMATION DISTRIBUTION METHOD**

(30) Priority: 14.03.2003 JP 2003070408
(71) Applicant: Softbank BB Corp., Tokyo 105-7304 (JP)
(72) Inventor: SON, Masayoshi, Minato-ku, Tokyo 1060041 (JP)
(74) Representative: Grünecker, Kinkeldey, Stockmair & Schwanhäusser Anwaltssozietät
(86) International application number: PCT/JP2004/003369
(87) International publication number: WO 2004/081785

(57) **Abstract**

An information delivery system, an information delivery server, a printer and an information delivery method are provided in which it is possible to reduce the number of steps which must be taken by a user for displaying delivery data delivered by a server and the like, and prevent the replication of the delivery data and the unauthorized distribution thereof to a third party.

The information delivery system in accordance with the present invention comprises an information delivery server 10 and printers 40 provided in a user's house 20a and a store 30a. The information delivery server 10 is connected to an IP network 1 which is a wide area network through which the information delivery server 10 can communicate with the user's house 20a and the store 30a. In addition, the information delivery server 10 comprises a user information DB server 11, a newspaper server 12, an advertisement server 13, an announcement server 14 and a facsimile conversion server 15.

## Description

### Technical field

The present invention relates to an information delivery system, an information delivery server, a printer and an information delivery method for delivering information to users through a communication network.

### Background Art

With the advent of information technology (IT) and high speed communication networks, several systems for delivering a variety of information such as news and advertisements to the users of communication networks have been proposed and implemented.

In this kind of the information delivery method, a server accumulating delivery data transmits data to an information communication terminal, for example, a personal computer, a personal digital assistant (PDA), a portable telephone terminal and the like through a communication network such as the Internet. For example, a method of making use of email for delivering predetermined information to registered users (for example, as described in the Japanese Patent Publication No. 3013802 (refer to page 5, Fig. 2)).

However, there is the following problem in the prior art information delivery method as discussed above. First, since delivery data is transmitted to the information communication terminal of a user, the user has to manipulate the information communication terminal in order to display the delivery data. Particularly, in the case where the user obtains delivery data by the use of a personal computer, it is tedious for the user to start up the personal computer and manipulate it to create a connection with the communication network, especially if he is busy it causes inconvenience to him. Also, even if the user can use a PDA or a portable telephone terminal for the same purpose, he has to take a sequence of steps as required for displaying the delivery data as transmitted.

Furthermore, in the case of the information delivery method making use of email as described above, the delivery data can be prepared basically only as character data (text data), and the text data has its limitations in advertisements which become more effective when photos and illustrations are suitably utilized.

Still further, delivery data as transmitted to the information communication terminals of users and other types of information publicized on the Internet by WWW (world-wide-web) severs and the like can be accumulated and stored as data in the storage unit of the information communication terminals of the users, and in addition to this, it is impossible to effectively inhibit such deeds of the user. For example, if desired, a user can produce a number of printed sheets of delivery data having the same quality by the use of a printer connected to the information communication terminal of the user.

Taking into consideration the above circumstances, in the case of journalistic organizations such as newspaper publishers which serve to provide information in business, it is often the case that the delivery data and the contents of information open on the Internet are limited.

Taking into consideration the above circumstances, it is an object of the present invention to provide an information delivery system, an information delivery server, a printer and an information delivery method in which it is possible to reduce the number of steps which must be taken by a user for displaying delivery data delivered by a server and the like, and prevent the replication of the delivery data and the unauthorized distribution thereof to a third party.

### Summary of The Invention

In order to accomplish the above objects and other objects, the present invention has the following features.

At first, in accordance with a first feature of the present invention, an information delivery system comprises a server that delivers information, and a printer that prints delivery data delivered by said server through a wide area network, said server comprising: an accumulating unit that accumulates said delivery data to be delivered to said printer; and a delivering unit that delivers said delivery data accumulated in said accumulating unit to said printer through said wide area network as data which can be printed only by said printer, said printer comprising: a print unit that prints said delivery data delivered by said delivering unit without storing said delivery data.

By this configuration, the delivery data as delivered from the server is directly printed by the printer located in a user's house through the wide area network, and thereby it is possible to eliminate the need for manipulation of a personal computer and the like which would otherwise be required for displaying and printing the delivery data.

By this configuration, since the printer prints delivery data delivered from the server without accumulating or storing the delivery data, it is possible to prevent a user from distributing the delivery data to a third party, and producing a number of printed sheets of the delivery data having the same quality by the use of the delivery data.

By this configuration, since the printer is used to print the delivery data, as compared with text information delivery by the email it is possible to easily deliver expressive information in which photos and illustrations are suitably utilized.

In the first aspect of the present invention, it is preferred that said delivering unit delivers said delivery data to said printer as data in a streaming format which can be printed only by said printer, and that said print unit prints said delivery data delivered as data in said streaming format without storing said delivery data.

By this configuration, since the delivery data is delivered to the printer as data in a streaming format, it is possible to successively print information each time the printer receives part of the delivery data, and the delivery data can be delivered while absorbing speed differences between the printing capacity of the printer and the information transfer capacity of the wide area network.

In the first aspect of the present invention, it is preferred that said server further comprises an information category acquisition unit that acquires a category of said delivery data from an information communication terminal through said wide area network, and that said delivering unit delivers said delivery data which is selected on the basis of the category of said delivery data acquired by said information category acquisition unit to said printer which is associated with the user of said information communication terminal.

By this configuration, since the server acquires the category of the delivery data which a user desired, it is possible to deliver only the information which is necessary for the user.

In the first aspect of the present invention, it is preferred that said server further comprises a user property information acquisition unit that acquires property information of users from an information communication terminal through said wide area network, and that said delivering unit delivers said delivery data which is selected on the basis of said property information acquired by said property information acquisition unit to said printer which is associated with the user of said information communication terminal.

By this configuration, since the property information of users such as genders, residences and other interests is acquired by the server, it is possible to select and deliver the delivery data corresponding to the property information of the respective users from among the enormous volume of the delivery data accumulated in the server.

In the first aspect of the present invention, it is preferred that said delivering unit delivers said delivery data to said printer through said wide area network at a predetermined date and time.

By this configuration, since the server delivers delivery data to a printer through the wide area network at a predetermined date and time, the user can periodically acquire delivery data.

In the first aspect of the present invention, it is preferred that said server further comprises: a title list transmitting unit that transmits a title list of said delivery data to an information communication terminal through said wide area network on the basis of a request from said information communication terminal; and a response information acquisition unit that acquires a response from said information communication terminal indicating that a particular title is selected from said title list, and an identifier assigned to said information communication terminal, wherein said delivering unit delivers said delivery data corresponding to the particular title as selected to said printer associated with said identifier as acquired by said response information acquisition unit.

By this configuration, the server transmits a title list of the delivery data to a personal computer and the like of a user, and transmits to a printer the contents of the delivery data corresponding to a particular title selected by the user with the personal computer and the like, and thereby it is possible to readily deliver the delivery data in response to a request from the user.

In the first aspect of the present invention, it is preferred that said server further comprises: a facsimile receiving unit that receives a facsimile signal transmitted to a predetermined subscriber telephone number, and accumulates image data generated on the basis of the facsimile signal as received in said accumulating unit, and that said delivering unit delivers said image data accumulated in said accumulating unit to said printer associated with said subscriber telephone number as said delivery data.

By this configuration, the server receives a facsimile signal transmitted to a predetermined subscriber telephone number, and delivers image data generated on the basis of the facsimile signal to a printer, and thereby the user can acquire the image of the facsimile signal by the printer.

In the first aspect of the present invention, it is preferred that said server further comprises: a usage acquisition unit that acquires the usage of a consumable supply which is consumed in said printer; a printer information generation unit that, when said usage as acquired by said usage acquisition unit matches a predetermined condition, generates unique information identifying the printer.

By this configuration, the server acquires the usage of consumable supplies such as the amount of ink remaining in an ink cartridge installed in a printer and the number of sheets printed by the printer, and therefore, when the ink amount remaining in the ink cartridge is below a certain value or when the number of printed sheets is larger than a certain value, it is possible to urge the user of the printer to replenish the consumable supplies.

In accordance with the second aspect of the present invention, an information delivery method of delivering delivery data from a server makes use of a printer which prints the delivery data delivered through a wide area network and said server, said information delivery method comprising: a step A of delivering said delivery data to said printer through said wide area network as data which can be printed only by said printer; and a step B of printing said delivery data delivered by said server without storing said delivery data.

In the second aspect of the present invention, it is preferred that said server delivers said delivery data to said printer as data in a streaming format which can be printed only by said printer in said step A, and that said printer prints said delivery data delivered as data in said streaming format without storing said delivery data in said step B.

In the second aspect of the present invention, it is preferred that the method further comprises a step of acquiring a category of said delivery data by said server from an information communication terminal through said wide area network, wherein said server delivers, in said step A, said delivery data which is selected on the basis of the category of said delivery data to said printer which is associated with the user of said information communication terminal.

In the second aspect of the present invention, it is preferred that the method further comprises a step of acquiring property information of a user by said server from an information communication terminal through said wide area network, wherein said server delivers, in said step A, said delivery data which is selected on the basis of the property information to said printer which is associated with the user of said information communication terminal.

In the second aspect of the present invention, it is preferred that said server delivers said delivery data to said printer through said wide area network at a predetermined date and time.

In the second aspect of the present invention, it is preferred that the method further comprises a step of transmitting a title list of said delivery data from said server to an information communication terminal through said wide area network on the basis of a request from said information communication terminal, wherein said server delivers, in said step A, delivers said delivery data corresponding to a particular title as selected from said title list by said information communication terminal to said printer associated with an identifier as assigned to said information communication terminal.

In the second aspect of the present invention, it is preferred that the method further comprises a step of receiving a facsimile signal transmitted to a predetermined subscriber telephone number by said server, and generating image data on the basis of the facsimile signal as received, wherein said server delivers, in said step A, delivers said image data to said printer associated with said subscriber telephone number as said delivery data.

In the second aspect of the present invention, it is preferred that the method further comprises a step of acquiring the usage of a consumable supply which is consumed in said printer, and when said usage matches a predetermined condition, generates unique information identifying the printer.

### Brief Description Of The Drawings

Fig. 1 is a view showing the network configuration including an information delivery system in accordance with an embodiment of the present invention.
Fig. 2 is a block diagram showing the configuration of the logic functions of an information delivery server (user information DB server) in accordance with the embodiment of the present invention.
Fig. 3 is a block diagram showing the configuration of the logic functions of an information delivery server (newspaper server) in accordance with the embodiment of the present invention.
Fig. 4 is a block diagram showing the configuration of the logic functions of an information delivery server (advertisement server) in accordance with the embodiment of the present invention.
Fig. 5 is a block diagram showing the configuration of the logic functions of an information delivery server (announcement server) in accordance with the embodiment of the present invention.
Fig. 6 is a block diagram showing the configuration of the logic functions of an information delivery server (facsimile conversion server) in accordance with the embodiment of the present invention.
Fig. 7 is a block diagram showing the configuration of the logic functions of a printer in accordance with the embodiment of the present invention.
Fig. 8 is a flowchart showing an information delivery method in accordance with the embodiment of the present invention.
Fig.9 is a flowchart showing the information delivery method in accordance with the embodiment of the present invention.
Fig. 10 is a schematic view showing an exemplary screen generated by the information delivery server in accordance with the embodiment of the present invention.
Fig.11 is a flowchart showing the information delivery method in accordance with the embodiment of the present invention.

### Best Mode for Carrying Out the Invention

### (Configuration of The Information Delivery System In Accordance With The Present Embodiment)

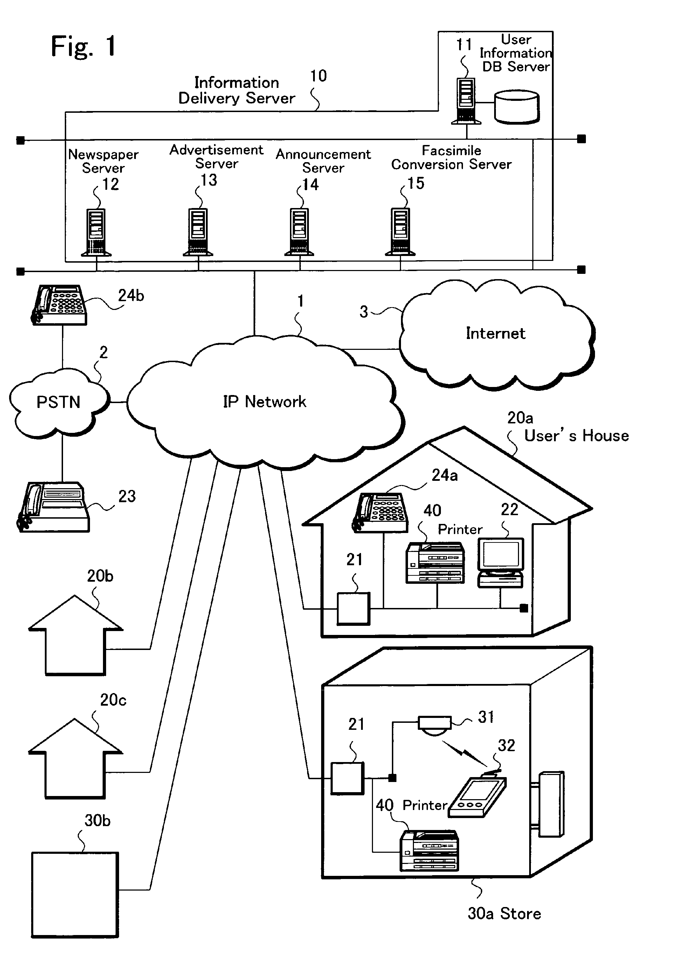

An embodiment of the present invention will be explained with reference to drawings. Fig. 1 is a view showing the network configuration including the information delivery system and several equipment related in accordance with the present embodiment.

As shown in the figure, the information delivery system includes an information delivery server 10 and printers 40 provided in a user's house 20a and a store 30a.

The information delivery server 10 is connected to an IP network 1 which is a wide area network through which it can communicate with the user's house 20a and the store 30a.

On the other hand, the printers 40 provided in the user's house 20a and the store 30a are equipped with a wired LAN interface such as 100BASE-TX, and connected to the IP network 1 through an ADSL modem 21 in the case of the present embodiment. Incidentally, the printer 40 in accordance with the present embodiment may be given to the users of the IP network 1 by the operator of the IP network 1. Alternatively, the printer 40 and the ADSL modem 21 can be connected through the wireless LAN interface such as IEEE802.11a/b in place of the wired LAN interface.

The IP network 1 is a communication network for transferring IP packets, and in the case of the present embodiment the IP network 1 is capable of multicasting IP packets in compliance with IETF RFC1112 and so forth in order to effectively transfer IP packets containing the same data.

The ADSL modem 21 enables high speed digital communications through a digital subscriber line metallic interface and, for example, it may be an xDSL modem in compliance with ITU-T G.992.1 Annex A.ex and provided with a LAN interface such as 100BASE-TX through which the printer 40 and the like can be connected. In addition, the ADSL modem 21 may be provided with an interface for connecting a telephone terminal (FXS: Foreign exchange Station or the like) in order to provide an IP phone service on the basis of VoIP (Voice over IP). Furthermore, the ADSL modem 21 may be provided with a decoder for decoding the sound data to an analog signal when predetermined sound data is received, and a speaker for playing back the sound data.

The user's house 20a is the home of a user of the IP network 1 and the like. In the user's house 20a, there are a telephone terminal 24a and a personal computer 22 which is the information communication terminal used by the user, in addition to the ADSL modem 21 and the printer 40 as described above. The personal computer 22 and the printer 40 are connected to the ADSL modem 21 through a LAN interface such as 100BASE-TX. On the other hand, the telephone terminal 24a is connected to the ADSL modem 21 through the telephone terminal connection interface as discussed above.

The personal computer 22 serves to receive delivery data through the ADSL modem 21 and the IP network 1 from a WWW server (not shown in the figure) located in the information delivery server 10 or the Internet 3. In addition, the telephone terminal 24a can be used to make and receive a call to/from a telephone terminal in a user's houses 20b or 20c in which the similar equipment is arranged as in the user's house 20a. Furthermore, the telephone terminal 24a can be used to make and receive a call to/from a telephone terminal 24b connected to a public switched telephone network 2 which makes use of call switching and is interconnected with the IP network 1.

The printer 40 located in the user's house 20a can print delivery data delivered from the information delivery server 10 without accumulating or storing the delivery data in a memory and the like. It is therefore possible for the user in the user's house 20a to acquire regular copies of delivery data in the same manner as a newspaper is delivered by registering the category (or categories) and delivery time (or delivery times) of the delivery data with the information delivery server 10 in advance. Furthermore, it is also possible for the user in the user's house 20a to send a request for delivering delivery data to the information delivery server 10 from the personal computer 22 such that the information delivery server 10 readily delivers the delivery data as requested to the printer 40 located in the user's house 20a when necessary.

In addition, a facsimile terminal 23 for performing facsimile communications is connected to the public switched telephone network 2. The facsimile terminal 23 in accordance with the present embodiment serves to transmit facsimile signals of text, photos and the like to the user's house 20a. The information delivery server 10 serves to receive the facsimile signals, convert the facsimile terminal as received into data which can be printed by the printer 40, and deliver the data. By this process, the printer 40 can print text, photos and the like transmitted as facsimile signals from the facsimile terminal 23, and function as a facsimile receiving terminal in cooperation with the information delivery server 10.

The store 30a is a store such as an eating and drinking place where an Internet-access service through a wireless LAN is provided to the customers of the store as a so called wireless LAN connection service. The store 30a is provided with a wireless LAN base station 31 for providing the wireless LAN connection service in addition to the ADSL modem 21 and the printer 40 as described above. The wireless LAN base station 31 and the printer 40 are connected to the ADSL modem 21 through a LAN interface such as 100BASE-TX.

A customer of the store 30a can use the wireless LAN connection service by making use of his PDA 32 supporting the wireless LAN communication and accessing the wireless LAN base station 31 located in the store 30a. Furthermore, in the case of the present embodiment, a customer of the store 30a can send a request for delivering delivery data to the information delivery server 10 from the PDA 32 such that the information delivery server 10 delivers the delivery data as requested to the printer 40 located in the store 30a. The printer 40 prints the delivery data as delivered, and thereby the customer of the store 30a sending the request for delivering delivery data can acquire the delivery data as printed. Incidentally, a store 30b is also a store such as an eating and drinking place where the wireless LAN connection service is provided as in the store 30a, and the similar equipment is arranged therein as in the store 30a.

### (Configuration of The Publication In Accordance With The Present Embodiment)

Next, the configuration of the information delivery server 10 in accordance with the present embodiment will be explained. As shown in Fig. 1, the information delivery server 10 comprises a user information DB server 11, a newspaper server 12, an advertisement server 13, an announcement server 14 and a facsimile conversion server 15. Incidentally, the respective servers need not be installed in the same location but may be located in different places as long as they can be connected to the IP network 1 and communicate with each other. In addition, weighing the processing capacity and processing load of hardware (the respective server computers), it is also possible to implement the functions of a plurality of servers within the same hardware system or distribute the functions of one server among a plurality of hardware systems.

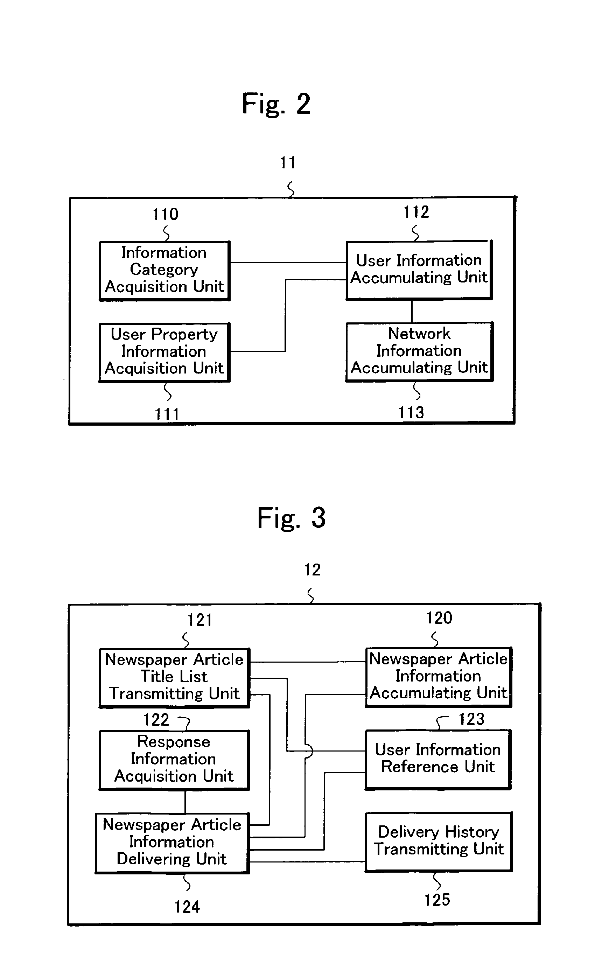

Fig. 2 is a block diagram showing the configuration of the logic functions of the user information DB server 11 in accordance with the present embodiment. As shown in the figure, the user information DB server 11 includes an information category acquisition unit 110, a user property information acquisition unit 111, a user information accumulating unit 112 and a network information accumulating unit 113.

In the case of the present embodiment, the information category acquisition unit 110 serves to acquire the categories of delivery data which a user of the IP network 1 desires. The information delivery server 10 accumulates a variety of information such as newspaper articles and advertisements to be described below. A user can register the categories of information he desire to acquire such that the information delivery server 10 delivers the delivery data to the user in accordance with the categories.

In regard to newspaper articles, the information delivery server 10 may provide categories, e.g., politics/economy, society, international, sports, entertainment and so forth, and a user can determine whether or not the delivery of each category is to be delivered to him. Also, the information delivery server 10 allows the user to designate the delivery time of the delivery data. More specifically speaking, the user can select categories of delivery data by accessing the user information DB server 11 with the personal computer 22 used by himself located in the user's house 20a (20b or 20c).

In the case of the present embodiment, the user property information acquisition unit 111 serves to acquire the property information of a user for determining the properties of the user connected to the IP network 1. More specifically speaking, a user can register own properties with the user information DB server 11 by accessing the user information DB server 11 through the personal computer 22 which is located in the user's house 20a (20b or 20c) and used by the user.

The properties of a user include basic information such as a name, a gender, a residence, an age, a subscriber telephone number, a user ID and an email address and information relating to personal preferences such as favorite sports, favorite foods, favorite music and other interests. Meanwhile, when going out, a user may access the user information DB server 11 from the store 30a by the use of the PDA 32 of himself.

In the case of the present embodiment, the user information accumulating unit 112 serves to accumulate information relating to users as acquired by the information category acquisition unit 110 and the user property information acquisition unit 111.

Specifically speaking, the user information accumulating unit 112 accumulates information relating to users as acquired by the information category acquisition unit 110 and the user property information acquisition unit 111.

Also, the user information accumulating unit 112 can acquire data indicative of the number of pages and the number of times of delivering newspaper article information as delivered to the printer 40 located in the user's house 20a from the newspaper server 12. Furthermore, the user information accumulating unit 112 can accumulate the account information of the users of the IP network 1 on the basis of the number of pages and the number of times of delivering information as acquired and the IP addresses of the printers 40 stored in the network information accumulating unit 113 and associated with the respective users of the IP network 1.

In the case of the present embodiment, the network information accumulating unit 113 serves to accumulate the information about the ADSL modems 21 and the printers 40 located in the user's houses 20a (20b or 20c) and the store 30a (30b). The network information accumulating unit 113 accumulates, for example, the IP addresses assigned to the ADSL modems 21 and the printers 40, and the model numbers and IDs (e.g., manufacturer's serial number) of the printers 40, which are associated with the user information accumulated in the user information accumulating unit 112.

In addition, the network information accumulating unit 113 serves as a usage acquisition unit for acquiring information about the usage of consumable supplies of the printers 40 as notified by the printers 40, for example, the information about the number of printed sheets and the amount of ink remaining in an ink cartridge installed in the respective printers 40.

Furthermore, when the information about the usage of the printer 40 as acquired matches a predetermined condition, the network information accumulating unit 113 serves as a printer information generation unit which generates a list containing the ID of this printer 40, the residence of the user and so forth on the basis of the IP address of this printer 40. Incidentally, the predetermined condition is, for example, that the ink amount remaining in an ink cartridge is below a certain value and that the number of printed sheets is larger than a certain value.

Since the network information accumulating unit 113 has such functionality, it is possible to timely urge the user of the printer 40 in the predetermined usage condition to replenish the consumable supplies such as an ink cartridge and printer sheets.

Fig. 3 is a block diagram showing the configuration of the logic functions of the newspaper server 12 in accordance with the present embodiment.

As shown in the figure, the newspaper server 12 comprises a newspaper article information accumulating unit 120, a newspaper article title list transmitting unit 121, a response information acquisition unit 122, a user information reference unit 123, a newspaper article information delivering unit 124 and a delivery history transmitting unit 125.

In the case of the present embodiment, the newspaper article information accumulating unit 120 serves to accumulate newspaper article information as a kind of delivery data to be delivered to the printers 40. The newspaper article information accumulating unit 120 readily accumulates the latest information comprising newspaper articles to update the contents of information. The newspaper article information accumulating unit 120 can accumulate not only the latest newspaper articles but also the information comprising past newspaper articles. The information comprising newspaper articles as accumulated in the newspaper article information accumulating unit 120 are accumulated in association with the categories managed by the user information DB server 11.

In the case of the present embodiment, the newspaper article title list transmitting unit 121 serves to transmit the title list of the newspaper articles accumulated in the newspaper article information accumulating unit 120 to the personal computer 22 (or PDA 32) through the IP network 1. More specifically speaking, the newspaper article title list transmitting unit 121 can generate an HTML document of the list containing the titles (headings) indicative of the contents of newspaper articles accumulated in the newspaper article information accumulating unit 120. Furthermore, the newspaper article title list transmitting unit 121 can transmit the HTML document of the list containing the titles as generated to the personal computer 22 (or PDA 32) by the use of HTTP.

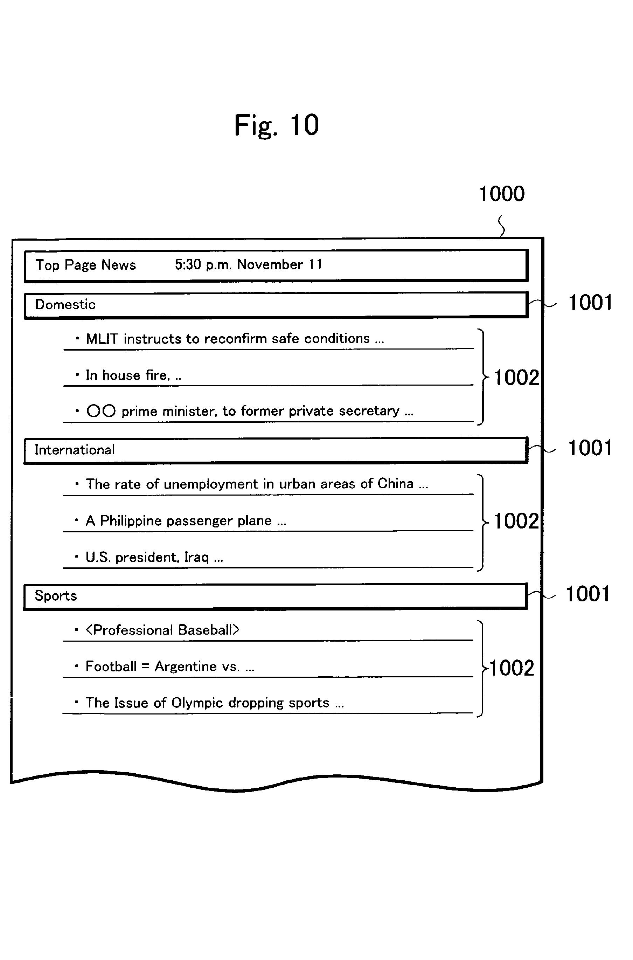

In addition, the newspaper article title list transmitting unit 121 can determine the contents of the title list in accordance with the categories of delivery data for each user and the user property information accumulated in the user information reference unit 123. Incidentally, while Fig. 10 shows an example of the title list as generated by the newspaper article title list transmitting unit 121, the sequence of operations with this title list for delivering delivery data will be described later.

In the case of the present embodiment, the response information acquisition unit 122 serves to receive a response from the personal computer 22 indicative of a particular item selected from among the titles in the title list which is transmitted from the newspaper article title list transmitting unit 121, together with the IP address (identifier) assigned to the personal computer 22.

More specifically speaking, the response information acquisition unit 122 acquires IP packets indicative of a particular title(s) from among the titles displayed by a browser installed in the personal computer 22. Furthermore, the response information acquisition unit 122 transfers the IP address assigned to the personal computer 22 contained in the IP packets as acquired to the newspaper article information delivering unit 124 together with the information about the selected titles.

The user information reference unit 123 receives a request from the newspaper article title list transmitting unit 121 or the newspaper article information delivering unit 124, and return the information as requested with reference to the user property information and the information about the network such as the IP address of the printer 40, as accumulated in the user information DB server 11.

In the case of the present embodiment, the newspaper article information delivering unit 124 serves to deliver the newspaper article information accumulated in the newspaper article information accumulating unit 120 in a data format which can be printed only by the printers 40 through the IP network 1. Also, the newspaper article information delivering unit 124 in accordance with the present embodiment serves to deliver the contents of the newspaper articles corresponding to the particular titles as selected to the printer 40 associated with the IP address of the personal computer 22 which is acquired by the response information acquisition unit 122.

In particular, the newspaper article information delivering unit 124 acquires the categories of the delivery data, the user property information, the delivery times, the model numbers and IP addresses assigned to the printers 40 for the respective users as accumulated in the user information DB server 11 through the user information reference unit 123.

Furthermore, the newspaper article information delivering unit 124 can generate delivery data by selecting appropriate information from among the newspaper articles accumulated in the newspaper article information accumulating unit 120 on the basis of the categories of delivery data and the user property information as acquired. More specifically speaking, the newspaper article information delivering unit 124 generates a print file (raster file) of the delivery data, which is supported by the destination printers 40, with reference to the model number of the printers 40 as received from the user information reference unit 123.

Also, the newspaper article information delivering unit 124 can acquire the information about particular titles selected by the personal computer 22 and the IP address of the personal computer 22 from the response information acquisition unit 122 on the basis of the title list transmitted from the newspaper article title list transmitting unit 121. Then, the newspaper article information delivering unit 124 can acquire the IP address of the printer 40 associated with the IP address of the personal computer 22 as acquired from the user information DB server 11 through the user information reference unit 123. As has been discussed above, the newspaper article information delivering unit 124 can deliver the newspaper articles corresponding to the particular titles selected by the user through the personal computer 22 to the destination printer 40.

The newspaper article information delivering unit 124 delivers the delivery data generated by the above process to the printer 40, for example, as a data stream in compliance with RTP (Real-time Transport Protocol) or RTCP(RTP Control Protocol) defined by IETF RFC1889. Also, the newspaper article information delivering unit 124 can multicast IP packets in the case where the same delivery data is delivered to a plurality of the printers 40.

The delivery data transmitted from the newspaper article information delivering unit 124 by IP multicasting is transferred only to the destination printers 40 through the routers and multilayer switches of the IP network 1. Accordingly, it is possible not to transmit delivery data to the printers 40 and the personal computer 22 which are not the destination of delivery, and thereby unauthorized acquisition and duplication of the delivery data can be prevented.

The delivery history transmitting unit 125 serves to transmit data indicative of the number of pages and the number of times of delivering newspaper article information as delivered by the newspaper article information delivering unit 124 in association with the IP addresses of the printers 40 and the user IDs at certain intervals to the user information DB server 11. The data indicative of the number of pages and the number of times of delivering information transmitted to the user information DB server 11 from the delivery history transmitting unit 125 is used to generate the account information of the users of the IP network 1 with respect to the delivery of the newspaper articles.

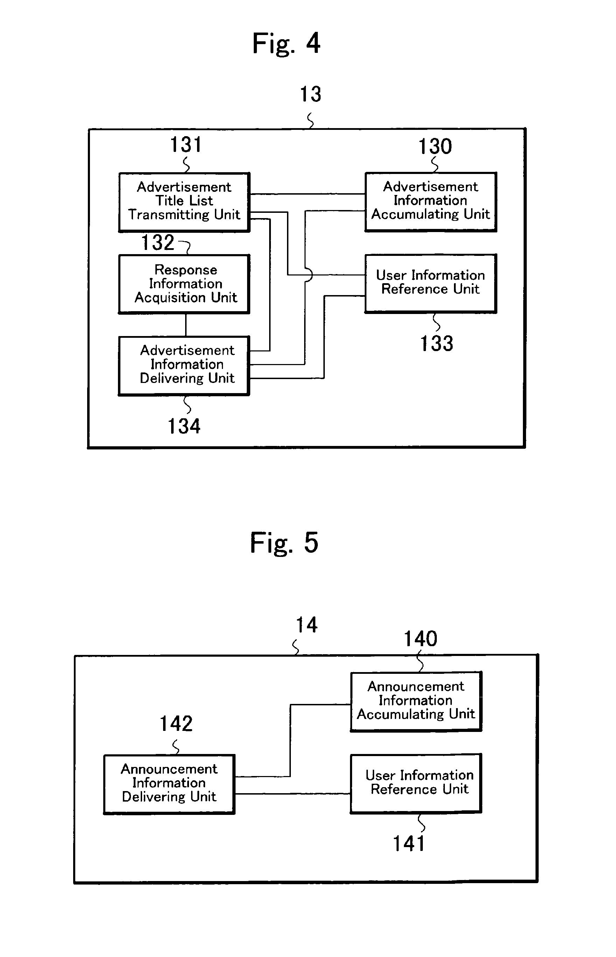

Fig. 4 is a block diagram showing the configuration of the logic functions of the advertisement server 13 in accordance with the present embodiment.

As shown in the figure, the advertisement server 13 includes an advertisement information accumulating unit 130, an advertisement title list transmitting unit 131, a response information acquisition unit 132, a user information reference unit 133 and an advertisement information delivering unit 134.

In the case of the present embodiment, the advertisement information accumulating unit 130 serves to accumulate advertisement information as a kind of delivery data to be delivered to the printers 40. More specifically speaking, the advertisement information accumulating unit 130 accumulates advertisement information which, for example, would correspond to advertising inserts in newspapers. Also, the advertisement information accumulated in the advertisement information accumulating unit 130 is described in a page descriptive language such as PostScript, and accumulated in association with the categories and the classification of the user property information managed by the user information DB server 11.

Also, the advertisement information accumulating unit 130 may have a function of transferring the accumulated advertisement information to the newspaper server 12 in response to a request from the newspaper article information delivering unit 124 of the newspaper server 12. By this function of the advertisement information accumulating unit 130, the newspaper article information delivering unit 124 can include advertisement information in the delivery data of newspaper articles by making use of the advertisement information accumulated in the advertisement information accumulating unit 130. Also, the newspaper article information delivering unit 124 may include advertisement information appropriate for the user property information of each user in the delivery data of newspaper articles by referring to the user property information accumulated in the user information DB server 11.

In the case of the present embodiment, the advertisement title list transmitting unit 131 serves to transmit the title list of advertisements accumulated in the advertisement information accumulating unit 130 to the personal computer 22 (or the PDA 32) through the IP network 1. In particular, the advertisement title list transmitting unit 131 can generate an HTML document of the list containing the titles (headings) indicative of the contents of advertisement accumulated in the advertisement information accumulating unit 130. Furthermore, the advertisement title list transmitting unit 131 can transmit the HTML document of the list containing the titles as generated to the personal computer 22 (or PDA 32) by the use of HTTP.

In addition, the advertisement title list transmitting unit 131 can determine the contents of the title list in accordance with the categories of delivery data for each user and the user property information accumulated in the user information reference unit 123.

In the case of the present embodiment, the response information acquisition unit 132 serves to receive a response from the personal computer 22 indicative of a particular title(s) selected from among the titles in the title list which is transmitted from the advertisement title list transmitting unit 131, together with the IP address (identifier) assigned to the personal computer 22.

More specifically speaking, the response information acquisition unit 132 acquires IP packets indicative of a particular title(s) from among the titles displayed by a browser installed in the personal computer 22. Furthermore, the response information acquisition unit 132 transfers the IP address assigned to the personal computer 22 contained in the IP packets as acquired to the advertisement information delivering unit 134 together with the information about the selected titles.

The user information reference unit 133 receives a request from the advertisement title list transmitting unit 131 or the advertisement information delivering unit 134, and return the information as requested with reference to the user property and the information about the network such as the IP address of the printer 40, as accumulated in the user information DB server 11.

In the case of the present embodiment, the advertisement information delivering unit 134 serves to deliver the advertisement information accumulated in the advertisement information accumulating unit 130 in a data format which can be printed only by the printer 40 through the IP network 1. Also, the advertisement information delivering unit 134 in accordance with the present embodiment serves to deliver the contents of advertisements corresponding to the particular title as selected to the printers 40 associated with the IP address of the personal computer 22 which is acquired by the response information acquisition unit 132.

In particular, the advertisement information delivering unit 134 acquires the categories of the delivery data, the user property information, the delivery time, the model number and IP address assigned to the printer 40 for the respective users as accumulated in the user information DB server 11 through the user information reference unit 133.

Furthermore, the advertisement information delivering unit 134 can generate delivery data by selecting preferred information from among the advertisement information accumulated in the advertisement information accumulating unit 130 on the basis of the categories of delivery data and the user property information as acquired. More specifically speaking, the advertisement information delivering unit 134 generates a print file (raster file) of the delivery data, which is supported by the destination printers 40, with reference to the model number of the printers 40 as received from the user information reference unit 133. For example, the advertisement information delivering unit 134 can generate and deliver an advertisement only to the users having a particular hobby on the basis of the property information of the respective users accumulated in the user information DB server 11.

Also, the advertisement information delivering unit 134 can acquire the information about particular titles selected by the personal computer 22 and the IP address of the personal computer 22 from the response information acquisition unit 132 on the basis of the advertisement title list transmitted from the advertisement title list transmitting unit 131. Then, the advertisement information delivering unit 134 can acquire the IP address of the printer 40 associated with the IP address of the personal computer 22 as acquired from the user information DB server 11 through the user information reference unit 133. As has been discussed above, the advertisement information delivering unit 134 can deliver the advertisements corresponding to the particular titles selected by the user through the personal computer 22 to the destination printer 40.

The advertisement information delivering unit 134 delivers the delivery data generated by the above process to the printer 40 as a data stream. Also, the advertisement information delivering unit 134 can multicast IP packets in the case where the same delivery data is delivered to a plurality of the printer units 40.

Incidentally, needless to say, the newspaper server 12 and the advertisement server 13 described above can be introduced and operated by the operator of the IP network 1, but it is also possible to introduce and operate the server group by a newspaper publisher and so forth.

Fig. 5 is a block diagram showing the configuration of the logic functions of the announcement server 14 in accordance with the present embodiment. As shown in the figure, the announcement server 14 includes an announcement information accumulating unit 140, a user information reference unit 141 and an announcement information delivering unit 142.

In the case of the present embodiment, the announcement information accumulating unit 140 serves to accumulate information to be immediately notified to the users of the IP network 1. The information accumulated in the announcement information accumulating unit 140 includes, for example, the information about a disaster such as flood damage or an earthquake, the information about wanted criminals, the information about a big incident, and other information which would be announced by an extra edition of a newspaper. Also, the information accumulated in the announcement information accumulating unit 140 is described in a page descriptive language such as PostScript, and accumulated in association with the categories and the classification of the user property information managed by the user information DB server 11.

In addition, the announcement information accumulating unit 140 may accumulate sound information. For example, the announcement information accumulating unit 140 may accumulate sound information encoded by ITU-T G.729 and so forth. The sound information is delivered by an announcement information delivering unit 142 to be described below to the users of the IP network 1, and in this case the sound information is transmitted to the ADSL modems 21 in place of the printers 40 used by the users. Furthermore, in this case, the ADSL modem 21 is provided with a decoder for decoding and a speaker in order to play back the sound information delivered by the announcement information delivering unit 142.

The user information reference unit 141 receives a request from the announcement information delivering unit 142, and return the information as requested with reference to the user property and the information about the network such as the IP address of the printers 40, as accumulated in the user information DB server 11.

In the case of the present embodiment, the announcement information delivery unit 142 serves to deliver the information accumulated in the announcement information accumulating unit 140 in a data format which can be printed only by the printer 40 through the IP network 1. In particular, the announcement information delivery unit 142 acquires the categories of the delivery data, the user property information, the IP address assigned to the printer 40 for the respective users as accumulated in the user information DB server 11 through the user information reference unit 141. Furthermore, the announcement information delivery unit 142 can select the printers 40 as destinations on the basis of the categories of delivery data and the user property information as acquired. More specifically speaking, the announcement information delivery unit 142 generates a print file (raster file) of the delivery data, which is supported by the printer 40 of the destination, with reference to the model number of the printer 40 as received from the user information reference unit 141. By this function of the announcement information delivering unit 142, for example, it is possible to deliver specific disaster information corresponding to the living place of each user.

Furthermore, the announcement information delivering unit 142 delivers the delivery data generated by the above process to the printers 40 as a data stream, in the same manner as the newspaper article information delivering unit 124 and the advertisement information delivering unit 134. Also, the announcement information delivery unit 142 can multicast IP packets in the case where the same delivery data is delivered to a plurality of the printers 40.

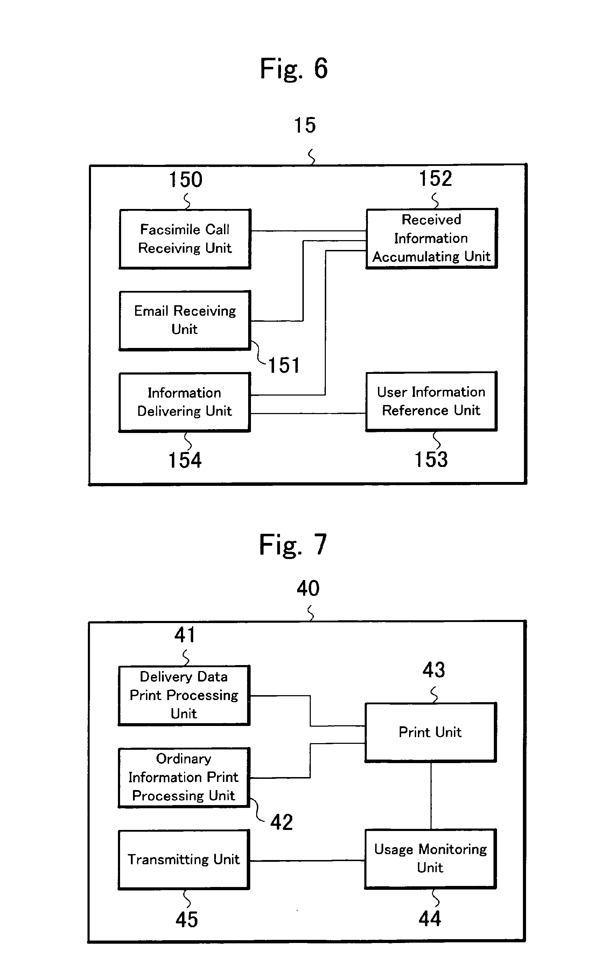

Fig. 6 is a block diagram showing the configuration of the logic functions of the facsimile conversion server 15. As shown in the figure, the facsimile conversion server 15 comprises a facsimile receiving unit 150, an email receiving unit 151, a received information accumulating unit 152, a user information reference unit 153, and an information delivering unit 154.

The facsimile receiving unit 150 serves to receive facsimile signals transmitted to the subscriber telephone numbers assigned to the users of the IP network 1. Furthermore, the facsimile receiving unit 150 generates image data which can be printed by the printers 40 on the basis of the facsimile signals as received, and accumulates the image data in the received information accumulating unit 152. The facsimile receiving unit 150 serves as facsimile receiving means.

In the case of the present embodiment, for example, a telephone number for receiving a facsimile call is assigned to a user of the IP network 1, such that the user can give anyone the telephone number as his facsimile number. A facsimile sender who is given such a telephone number can call the telephone number and send a facsimile document. A connection process is performed in response to a call to the telephone number through the IP network 1, and then the call is received by the facsimile receiving unit 150. Incidentally, the facsimile receiving unit 150 can receive facsimile signals in compliance with the G3 and G4 facsimile standards defined by ITU-T T.n.

The email receiving unit 151 serves to receive email sent to the email addresses assigned to the users of the IP network 1. More specifically speaking, the email receiving unit 151 can receive email in compliance with SMTP (Simple Mail Transfer Protocol) defined by IETF RFC821 and so forth. Furthermore, the email receiving unit 151 serves to generate image data which can be printed by the printers 40 on the basis of the contents of the email as received and accumulate the image data in the received information accumulating unit 152. Meanwhile, a user can arbitrarily select, by accessing the user information DB server 11, whether or not the email sent to the email address of the user is to be accumulated in the facsimile conversion server 15.

The received information accumulating unit 152 serves to accumulate the image data as generated by the facsimile receiving unit 150 or the email receiving unit 151. Specifically speaking, the received information accumulating unit 152 can accumulate the image data generated by the facsimile receiving unit 150 in association with the subscriber telephone numbers. In addition to this, the received information accumulating unit 152 can accumulate the image data generated by the email receiving unit 151 on the basis of the contents of email in association with the email addresses.

The user information reference unit 153 serves to return the data responsive to the request from the information delivering unit 154 by referring to the information about the network such as the IP addresses of the printers 40 accumulated in the user information DB server 11 in association with the information of users.

In the case of the present embodiment, the information delivering unit 154 serves to deliver the information accumulated in the received information accumulating unit 152 to the printers 40 through the IP network 1.

In particular, the information delivering unit 154 acquires the IP addresses of the printers 40, which are associated with the subscriber telephone numbers and the email addresses accumulated in the received information accumulating unit 152, from the user information DB server 11 through the user information reference unit 153. In addition, the users of the IP network 1 in accordance with the present invention can deliver the information accumulated in the received information accumulating unit 152 to a telephone number by designating the telephone number with the user information DB server 11. Since the user information DB server 11 and the facsimile conversion server 15 provide such functionality, when the user is present in the user's house 20a, it is possible to receive image data of a facsimile document by the printer 40, while when going out (for example, at his office) it is possible to receive image data by a facsimile terminal associated with the telephone number as designated.

Furthermore, the information delivering unit 154 delivers image data accumulated in the received information accumulating unit 152 to the printers 40 as a data stream on the basis of the IP address as acquired from the user information DB server 11. Incidentally, the destination of the data stream to be delivered by the information delivering unit 154 is basically a single printer 40 at a time, and therefore IP packets for unicast transmission are used rather than IP packets for multicast transmission.

While the configurations of the logic blocks of the respective servers of the information delivery server 10 have been explained, in the case of the present embodiment, the newspaper article information accumulating unit 120, the advertisement information accumulating unit 130, the announcement information accumulating unit 140 and the received information accumulating unit 152 serve as accumulating means. Also, in the case of the present embodiment, the newspaper article information delivering unit 124, the advertisement information delivering unit 134, the announcement information delivering unit 142 and the information delivering unit 154 serve as delivering means.

### (Configuration of The Printer In Accordance With The Present Embodiment)

Next, with reference to Fig. 7, the configuration of the logic blocks of the printer 40 in accordance with the present embodiment will be explained. As shown in the figure, the printer 40 comprises a delivery data print processing unit 41, an ordinary information print processing unit 42, a print unit 43, a usage monitoring unit 44 and a transmitting unit 45.

In the case of the present embodiment, the delivery data print processing unit 41 serves to receive delivery data from the information delivery server 10, convert the delivery data as received into data which can be printed by the print unit 43, and output the data to the print unit 43. More specifically speaking, in the case of the present embodiment, the delivery data print processing unit 41 is connected to the ADSL modem 21 through a LAN interface such as 100BASE-TX in order to receive the data stream as delivered from the information delivery server 10. Furthermore, the delivery data print processing unit 41 converts the received data stream successively into data containing pages, which are printable by the print unit 43, without internally accumulating or storing the delivery data, and outputs the converted data to the print unit 43.

The ordinary information print processing unit 42 serves to receive print data from the personal computer 22 used by the user through a LAN interface such as 100BASE-TX, and output the print data as received to the print unit 43. The printer 40 in accordance with the present embodiment can function also as a usual network printer by the ordinary information print processing unit 42. Incidentally, the printer 40 and the personal computer 22 can be connected by USB (Universal Serial Bus) or a parallel interface such as Centronics or SCSI, in place of the LAN interface such as 100BASE-TX.

The print unit 43 serves to print delivery data delivered by the information delivery server 10 and the contents of information transmitted by the personal computer 22 on the basis of the data output from the delivery data print processing unit 41 and the ordinary information print processing unit 42. The print unit 43 can be implemented on the basis of an ink jet system or a laser beam system.

In the case of the present embodiment, the usage monitoring unit 44 serves to monitor the usage of consumable supplies consumed in the printer 40. More specifically speaking, the usage monitoring unit 44 confirms the usage such as the amount of ink remaining in the ink cartridge installed in the printer 40 and the number of printed sheets at certain intervals, and transmits the confirmation information to the transmitting unit 45.

The transmitting unit 45 serves to notify the information indicative of the usage of the printer 40 as transferred from the usage monitoring unit 44 to the information delivery server 10. Specifically speaking, the transmitting unit 45 can transmit the information indicative of the usage of the printer 40 as transferred from the usage monitoring unit 44 to the user information DB server 11 as IP packets.

While the configuration of the logic blocks of the printer 40 has been explained, in the case of the present embodiment, the delivery data print processing unit 41 and the print unit 43 serve as printing means.

### (Information Delivery Method In Accordance With The Present Embodiment)

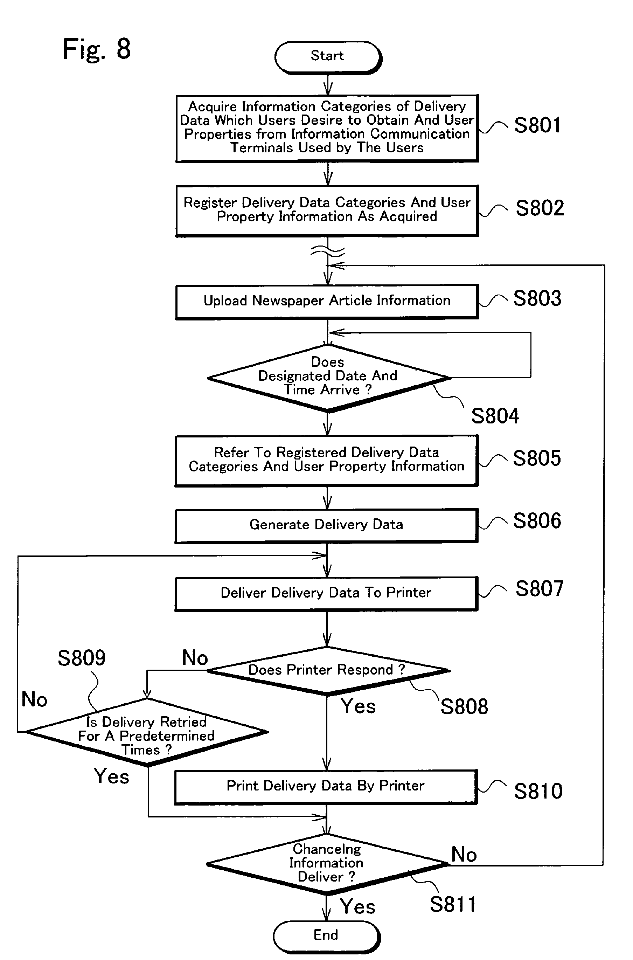

Next, with reference to Fig. 8 to Fig. 11, the information delivery method making use of the information delivery system in accordance with the present embodiment will be explained.

Fig.8 is a flowchart showing the method of delivering information comprising newspaper articles. First of all, the information delivery server 10 acquires the information categories of newspaper articles which users desire to obtain and user properties from information communication terminals such as the personal computer 22 used by the users of the IP network 1 (in step S801).

The information categories are, for example, politics/economy, society, international, sports, entertainment and so forth. Also, the user properties includes, for example, information relating to personal preferences such as favorite sports, foods, music and other interests. Furthermore, the information delivery server 10 can acquire a date and time (or time of day) at which a user desires to receive the information comprising newspaper articles. Incidentally, the operator of the information delivery server 10 has registered the basic information of users such as names and residences, and the network information such as the IP addresses assigned to the printers 40 used by users with the information delivery server 10 in advance.

The information delivery server 10 registers (in step S802) the desired delivery data categories and the user property information as acquired in step S801.

Also, the latest newspaper articles as externally prepared are uploaded in turn to the information delivery server 10 (in step S803). The information delivery server 10 refers (in step S804) to the predetermined date and time (or time of day) on which each user desires to receive the information, and refers (in step S805) to the desired delivery data categories and the user property information when the predetermined delivery date and time arrives.

Furthermore, the information delivery server 10 selects preferred information from among the uploaded newspaper articles on the basis of the delivery data categories and the user property information as referred to in step S805, and generate the newspaper article information to be delivered (in step S806).

Next, the information delivery server 10 transmits the newspaper article information as generated in step S806 to the printer 40 used by the user as the data stream (in step S807).

Incidentally, the information delivery server 10 can use IP multicasting through the IP network 1 in order to deliver the information comprising the same newspaper articles to a plurality of the printers 40 at once. Since IP multicasting is supported by the information delivery server 10 and the IP network 1, it is possible to lessen the increase in traffic load applied to the IP network 1 when delivering data. Furthermore, by supporting IP multicasting, it is possible not to transmit delivery data to the printers 40 and the personal computer 22 which are not the destination of delivery, and thereby unauthorized acquisition and duplication of the delivery data can be prevented.

Also, in the case where the printer 40 does not respond to the communication steps required for delivering the delivery data by the information delivery server 10 in step S807, the delivery process is retried for a predetermined times (in steps S808 and S809).

The printer 40 receives data stream delivered by the information delivery server 10, and immediately prints the data without internally accumulating or storing it (in step S810). A user can acquire printed sheets in which newspaper articles are printed on the basis of the information categories and user properties registered in advance by readily converting and printing the data stream as received by the printer 40.

Also, the information delivery server 10 continues delivering newspaper article information to the printer 40 at a predetermined date and time (or time of day) until receiving a request of the user for canceling or changing the information delivery (in step S811).

While the information delivery method of newspaper article information by the information delivery server 10 (the newspaper server 12) has been explained above, the information delivery method by the advertisement server 13 and the announcement server 14 can be implemented by the substantially same process flow.

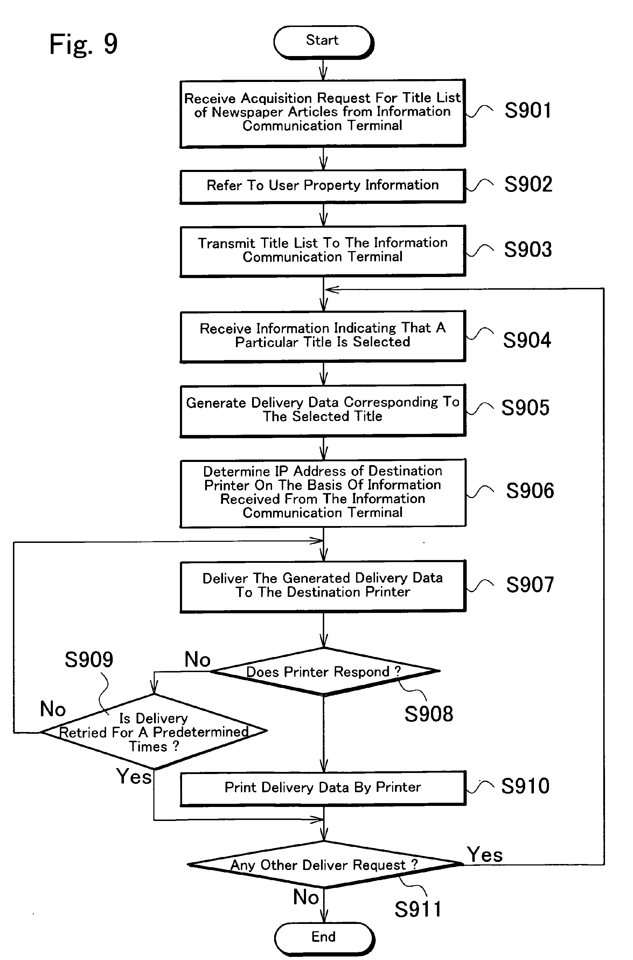

Next, with reference to Fig. 9 and Fig. 10, the method of delivering newspaper article information will be explained in which a user of the IP network 1 selects desired title(s) from among the title list of newspaper articles, and the information delivery server 10 delivers the newspaper article information as selected.

As shown in Fig. 9, at first, the information delivery server 10 receives an acquisition request for the title list of newspaper articles from the information communication terminal of the user such as the personal computer 22 or the PDA 32 (in step S901). More specifically speaking, the user accesses a particular Web page of the information delivery server 10 with the above information communication terminal, and transmits an acquisition request for the title list.

Incidentally, the user can transmit an acquisition request for the title list to the information delivery server 10 with the PDA 32 from the store 30a (30b) in place of the personal computer 22 located in the user's house 20a (20b or 20c).

The information delivery server 10 determines the user and refers to the property information of the user on the basis of the IP address contained in the IP packets of the acquisition request for the title list as received in step S901, and refers to the property information of the user (in step S902). However, in the case where the user is located in the store 30a (30b) when he transmits the acquisition request to the information delivery server 10 with the PDA 32, it may be true that the user cannot be determined on the basis of the IP address contained in the IP packets of the acquisition request (the IP address is usually given to the PDA 32 as an address in the address space assigned to the store 30a (30b)). For this reason, if the user is located in the store 30a (30b) when he accesses the information delivery server 10, the user is prompted to input the email address of him in order that the information delivery server 10 can uniquely identify the user in step S901.

Next, the information delivery server 10 generates an HTML document of a title list of newspaper articles on the basis of the newspaper article information as accumulated, and transmits the HTML document to the personal computer 22 or the PDA 32 of the user (in step S903). Meanwhile, the HTML document includes a plurality of categories 1001 each of which is displayed in a screen 1000 together with a plurality of newspaper article titles 1002 belonging to the category.

Furthermore, when a particular title 1002 is selected from the HTML document displayed by the personal computer 22 or the PDA 32, the information delivery server 10 receives the information indicating that the particular title is selected (in step S904). Then, the information delivery server 10 generates (in step S905) delivery data of the newspaper article corresponding to the particular title 1002 as received in step S904.

Next, the information delivery server 10 determines the IP address of the destination printer 40 by referring to the network information as accumulated (in step S906) on the basis of the IP address contained in the IP packets of the acquisition request as received in step S901. The delivery data can be delivered to the printer 40 located in the store 30a (30b), because the information delivery server 10 performs step S906 even in the case where the user accesses in the store 30a (30b) with the PDA 32.

Furthermore, the information delivery server 10 delivers (in step S907) newspaper article information corresponding to the particular title 1002 as received in step S904 as data stream to the printer 40 given the IP address which is determined in step S906.

Also, in the case where the printer 40 does not respond to the communication steps required for delivering the delivery data by the information delivery server 10 in step S907, the delivery process is retried for a predetermined times (in steps S908 and S909).

The printer 40 given the IP address which is determined by the information delivery server 10 in step S906 immediately prints the data stream delivered by the information delivery server 10 without internally accumulating or storing it (in step S910).

A user can acquire printed sheets in which newspaper articles are printed corresponding to a particular title as selected by readily converting and printing the data stream as received by the printer 40.

Also, if the user wants to get a further title(s) 1002 (in step S911), the process in step S904 to step S910 can be repeated.

While the information delivery method of particular newspaper article information by the information delivery server 10 has been explained above, the information delivery method by the advertisement server 13 can be implemented by the substantially same process flow.

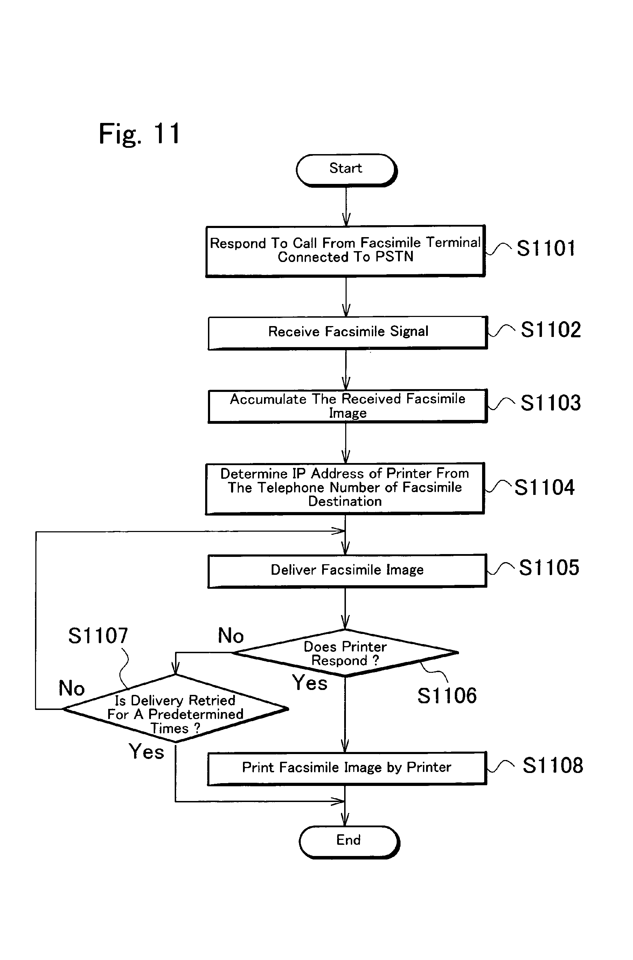

Next, with reference to Fig. 11, the method of delivering a facsimile image as transmitted from a facsimile terminal to the printer 40 will be explained. More specifically speaking, Fig. 11 is a flowchart showing the process in which an image such as a document and a photo is transmitted from the facsimile terminal 23 connected to the public switched telephone network 2 shown in Fig. 3 to a user of the IP network 1 located in the user's house 20a (20b or 20c).

First, the facsimile sender makes a call from the facsimile terminal 23 to the telephone number for facsimile transmission notified by the user in the user's house 20a (20b or 20c), and then the information delivery server 10 responds to the call from the facsimile terminal 23 (in step S1101).

Next, the information delivery server 10 receives the facsimile signal transmitted from the facsimile terminal 23 (in step S1102).

Furthermore, the information delivery server 10 converts the facsimile signal as received into image data which can be printed by the printer 40, and accumulates the image data (in step S1103) Then, the information delivery server 10 determines (in step S1104) the IP address of the printer, to which the image data converted in step S1103 is to be delivered, by referring to the user property information as accumulated on the basis of the telephone number of the call from the facsimile terminal 23.

Furthermore, the information delivery server 10 delivers (in step S1105) the image data accumulated in step S1103 as data stream to the printer 40 given the IP address which is determined in step S1104.

Also, in the case where the printer 40 does not respond to the communication steps required for delivering the delivery data by the information delivery server 10 in step S1105, the delivery process is retried for a predetermined times (in steps S1106 and S1107).

The printer 40 given the IP address which is determined in step S1104 immediately prints the data stream delivered by the information delivery server 10 without internally accumulating or storing it (in step S1108).

The user given the telephone number to which the facsimile terminal 23 makes a call can acquire printed sheets in which text, photos and the like are printed corresponding to the facsimile transmission by the facsimile terminal 23 by converting and immediately printing the data stream as received by the printer 40. Also, the information delivery server 10 can make a call to the facsimile terminal 23 to notify that the facsimile transmission is completed when all the data stream is delivered to the printer 40.

### (Effects And Advantages of Information Delivery System And Information Delivery Method In Accordance With The Present Embodiment)

As has been discussed above, in accordance with the information delivery system and the information delivery method of the present embodiment, the delivery data as delivered from the information delivery server 10 is directly printed by the printer 40 of a user of the IP network 1, and thereby it is possible to eliminate the need for manipulation of the personal computer 22 and the like which would otherwise be required for displaying and printing the delivery data. Also, since the printer 40 prints delivery data delivered from the information delivery server 10 without accumulating or storing the delivery data in the case of the present embodiment, it is possible to prevent a user of the IP network 1 from distributing the delivery data to a third party, and producing a number of printed sheets of the delivery data having the same quality by the use of the delivery data.

Furthermore, in accordance with the information delivery system and the information delivery method of the present embodiment having the above effects and advantages, while preventing the unauthorized distribution and duplication of delivery data by the use of the delivery data, it is possible to provide media equivalent to the delivery of newspapers such as morning newspapers which have conventionally been delivered to subscribers.

In the case of the present embodiment, since the property information of the users of the IP network 1 such as genders, residences and other interests is acquired by the information delivery server 10, it is possible to select and deliver the delivery data corresponding to the property information of the respective users from among the enormous volume of the delivery data accumulated in the information delivery server 10. For example, as compared with advertising inserts in newspapers as conventionally used, the information delivery server 10 (the advertisement server 13) in accordance with the present embodiment delivers advertisements only to the users of which the property information matches the advertisements so that the advertising provider can effectively and economically deliver advertisements. Also, in the case of the present embodiment, the information delivery server 10 (the announcement server 14) delivers disaster information corresponding to the living place of each user with reference to the property information (i.e., the residence of the respective users), and thereby the user can readily acquire specific disaster information corresponding to the living place of the user.

In the case of the present embodiment, the information delivery server 10 transmits the information indicative of the title list of delivery data to the personal computer 22 and the like used by a user of the IP network 1, and delivers the contents of the delivery data corresponding to a particular title selected by the user with the personal computer 22, and thereby it is possible to readily deliver the delivery data in response to the request from the user. In accordance with the information delivery system and the information delivery method of the present embodiment having the above effects and advantages, for example, by accumulating the past newspaper articles in the information delivery server 10, a user of the IP network 1 can search for and easily acquire desired newspaper articles. Furthermore, in the case of the present embodiment, the information delivery server 10 delivers a newspaper article to the printer 40 corresponding to a particular title as selected in response to a request from a user, and thereby it is possible to easily implement the paid provision of delivery data by charging for each particular title as selected by the user.

In the case of the present embodiment, the information delivery server 10 acquires usage information such as the amount of ink remaining in the ink cartridge installed in the respective printers 40 and the number of printed sheets, and if the ink amount remaining in the ink cartridge is below a certain value or if the number of printed sheets is larger than a certain value, the manufacturer's serial number of the corresponding printer 40 is generated by the information delivery server 10, such that it is possible to urge the user of the corresponding printer 40 to replenish the consumable supplies. Furthermore, it is also possible to periodically ship an amount of the consumable supplies to the user in advance of using up the consumable supplies on the basis of the usage of the printer 40 as acquired by the information delivery server 10.

### Industrial Applicability

In accordance with the present invention, as has been discussed above, it is possible to reduce the number of steps which must be taken by a user for displaying delivery data delivered by a server and the like, and prevent the replication of the delivery data and the unauthorized distribution thereof to a third party.

## Claims

1. An information delivery system comprising a server that delivers information, and a printer that prints delivery data delivered by said server through a wide area network, said server comprising:
an accumulating unit that accumulates said delivery data to be delivered to said printer; and
a delivering unit that delivers said delivery data accumulated in said accumulating unit to said printer through said wide area network as data which can be printed only by said printer,
said printer comprising:
a print unit that prints said delivery data delivered by said delivering unit without storing said delivery data.

2. The information delivery system as claimed in claim 1 wherein
said delivering unit delivers said delivery data to said printer as data in a streaming format which can be printed only by said printer, and wherein
said print unit prints said delivery data delivered as data in said streaming format without storing said delivery data.

3. The information delivery system as claimed in claim 1 wherein
said server further comprises an information category acquisition unit that acquires a category of said delivery data from an information communication terminal through said wide area network, and wherein
said delivering unit delivers said delivery data which is selected on the basis of the category of said delivery data acquired by said information category acquisition unit to said printer which is associated with the user of said information communication terminal.

4. The information delivery system as claimed in claim 1 wherein said server further comprises a user property information acquisition unit that acquires property information of users from an information communication terminal through said wide area network, and said delivering unit delivers said delivery data which is selected on the basis of said property information acquired by said property information acquisition unit to said printer which is associated with the user of said information communication terminal.

5. The information delivery system as claimed in claim 1 wherein said delivering unit delivers said delivery data to said printer through said wide area network at a predetermined date and time.

6. The information delivery system as claimed in claim 1 wherein said server further comprises:
a title list transmitting unit that transmits a title list of said delivery data to an information communication terminal through said wide area network on the basis of a request from said information communication terminal; and
a response information acquisition unit that acquires a response from said information communication terminal indicating that a particular title is selected from said title list, and an identifier assigned to said information communication terminal, wherein
said delivering unit delivers said delivery data corresponding to the particular title as selected to said printer associated with said identifier as acquired by said response information acquisition unit.

7. The information delivery system as claimed in claim 1 wherein said server further comprises:
a facsimile receiving unit that receives a facsimile signal transmitted to a predetermined subscriber telephone number, and accumulates image data generated on the basis of the facsimile signal as received in said accumulating unit, wherein
said delivering unit delivers said image data accumulated in said accumulating unit to said printer associated with said subscriber telephone number as said delivery data.

8. The information delivery system as claimed in claim 1 wherein said server further comprises:
a usage acquisition unit that acquires the usage of a consumable supply which is consumed in said printer;
a printer information generation unit that, when said usage as acquired by said usage acquisition unit matches a predetermined condition, generates unique information identifying the printer.

9. An information delivery server that delivers delivery data through a wide area network to a printer which prints said delivery data without storing said delivery data, comprising:
an accumulating unit that accumulates said delivery data to be delivered to said printer; and
a delivering unit that delivers said delivery data accumulated in said accumulating unit to said printer through said wide area network as data which can be printed only by said printer.

10. The information delivery server as claimed in claim 9 wherein said delivering unit delivers said delivery data to said printer as data in a streaming format which can be printed only by said printer.

11. The information delivery server as claimed in claim 9 further comprising an information category acquisition unit that acquires a category of said delivery data from an information communication terminal through said wide area network, wherein
said delivering unit delivers said delivery data which is selected on the basis of the category of said delivery data acquired by said information category acquisition unit to said printer which is associated with the user of said information communication terminal.

12. The information delivery server as claimed in claim 9 further comprising a user property information acquisition unit that acquires property information of users from an information communication terminal through said wide area network, wherein
said delivering unit delivers said delivery data which is selected on the basis of said property information acquired by said property information acquisition unit to said printer which is associated with the user of said information communication terminal.

13. The information delivery server as claimed in claim 9 wherein said delivering unit delivers said delivery data to said printer through said wide area network at a predetermined date and time.

14. The information delivery server as claimed in claim 9 further comprising:
a title list transmitting unit that transmits a title list of said delivery data to an information communication terminal through said wide area network on the basis of a request from said information communication terminal; and
a response information acquisition unit that acquires a response from said information communication terminal indicating that a particular title is selected from said title list, and an identifier assigned to said information communication terminal, wherein
said delivering unit delivers said delivery data corresponding to the particular title as selected to said printer associated with said identifier as acquired by said response information acquisition unit.

15. The information delivery server as claimed in claim 9 further comprising:
a facsimile receiving unit that receives a facsimile signal transmitted to a predetermined subscriber telephone number, and accumulates image data generated on the basis of the facsimile signal as received in said accumulating unit, wherein
said delivering unit delivers said image data accumulated in said accumulating unit to said printer associated with said subscriber telephone number as said delivery data.

16. The information delivery server as claimed in claim 9 further comprising:
a usage acquisition unit that acquires the usage of a consumable supply which is consumed in said printer;
a printer information generation unit that, when said usage as acquired by said usage acquisition unit matches a predetermined condition, generates unique information identifying the printer.

17. A printer that prints delivery data delivered through a wide area network from a server which delivers the delivery data, comprising:
a print unit that prints said delivery data delivered as data which can be printed only by said printer without storing said delivery data.

18. The printer as claimed in claim 17 wherein said print unit prints said delivery data delivered as data in a streaming format which can be printed only by said printer without storing said delivery data.

19. An information delivery method of delivering delivery data from a server by making use of a printer which prints the delivery data delivered through a wide area network and said server, said information delivery method comprising:
a step A of delivering said delivery data to said printer through said wide area network as data which can be printed only by said printer; and
a step B of printing said delivery data delivered by said server without storing said delivery data.

20. The information delivery method as claimed in claim 19 wherein said server delivers said delivery data to said printer as data in a streaming format which can be printed only by said printer in said step A, and wherein
said printer prints said delivery data delivered as data in said streaming format without storing said delivery data in said step B.

21. The information delivery method as claimed in claim 19 further comprising a step of acquiring a category of said delivery data by said server from an information communication terminal through said wide area network, wherein
said server delivers, in said step A, said delivery data which is selected on the basis of the category of said delivery data to said printer which is associated with the user of said information communication terminal.

22. The information delivery method as claimed in claim 19 further comprising a step of acquiring property information of a user by said server from an information communication terminal through said wide area network, wherein
said server delivers, in said step A, said delivery data which is selected on the basis of the property information to said printer which is associated with the user of said information communication terminal.

23. The information delivery method as claimed in claim 19 wherein said server delivers said delivery data to said printer through said wide area network at a predetermined date and time.

24. The information delivery method as claimed in claim 19 further comprising a step of transmitting a title list of said delivery data from said server to an information communication terminal through said wide area network on the basis of a request from said information communication terminal, wherein
said server delivers, in said step A, delivers said delivery data corresponding to a particular title as selected from said title list by said information communication terminal to said printer associated with an identifier as assigned to said information communication terminal.

25. The information delivery method as claimed in claim 19 further comprising a step of receiving a facsimile signal transmitted to a predetermined subscriber telephone number by said server, and generating image data on the basis of the facsimile signal as received, wherein
said server delivers, in said step A, delivers said image data to said printer associated with said subscriber telephone number as said delivery data.

26. The information delivery method as claimed in claim 19 further comprising a step of acquiring by said server the usage of a consumable supply which is consumed in said printer, and when said usage matches a predetermined condition, generates unique information identifying the printer.
